# EUROPEAN PATENT APPLICATION

(11) **EP 3 444 972 A1**
(43) Date of publication of application: **20.02.2019**
(21) Application number: 17186955.5
(22) Date of filing: 18.08.2017
(51) Int. Cl.: H04B 10/272, H04B 10/67, H04B 10/69

(54) **METHOD AND MEANS OF HANDLING SIGNALS IN AN OLT RECEIVER**

(71) Applicant: Nokia Solutions and Networks Oy, 02610 Espoo (FI)
(72) Inventor: PÖHLMANN, Wolfgang, 70435 Stuttgart (DE); BONK, Rene, 70435 Stuttgart (DE)
(74) Representative: Louis Pöhlau Lohrentz

(57) **Abstract**

The present invention discloses a method of handling signals in an Optical Line Terminal, OLT, in an optical network, the method comprising: a) receiving a first optical signal from at least one Optical Network Unit, ONU, b) splitting the first optical signal in power onto a first number of branches, obtaining a second optical signal on each of the branches, the first number being a natural number no less than 2; c) feeding the second optical signals on each of the branches respectively to a photoreceiver, obtaining an electrical signal on each of the branches; d) selecting one of the electrical signals for further processing, wherein, the selected electrical signal has the biggest electrical power among the electrical signals, the electrical power of which is below a tolerated electrical power of the photoreceiver.

## Description

### Field of the invention

The invention relates to communication technology, in particular to an optical network.

### Background

The next generation of Passive Optical Networks (PON), like NG-PON 2 or XGS-PON, offer an attractive transmission technology to establish fixed-mobile convergence (fronthaul and next-generation fronthaul links) for small cells in the full-fledged LTE-advanced and 5G era. These time-and-wavelength division multiplexed (TWDM)-PON is beneficial in terms of capital expenditures (CAPEX) and operational expenditures (OPEX), it can utilize the current deployed optical distribution networks and save the optical fiber resources and spaces for the equipment compared to current PtP or coarse-WDM fiber solutions. However, leveraging the advantages of PON for the 5G services require an optical network that offers a high flexibility, adaptability and the full range of deployment capabilities.

The upstream of the TDM-PON/TWDM-PON is defined as the direction of the signal starting from the customer/remote radio head (RRH)/unit connected to an ONU, towards the optical line terminal (OLT)/eNodeB/central-unit located in the central office. In this upstream direction, the PON optical receiver, located in the OLT, requires to handle a large optical input power variation. The reason of these power variations is threefold: first the optical network units (ONUs) located in the customer premises have different distances, i.e. different loss budget, to the OLT located in the CO. Second, the different ONUs might be connected at different optical power splitter levels. Third, the ONU transmitters can have an output power variation by up to 5dB from standards (ITU-T 989.2 [1]).

The NG-PON2/XGS-PON needs to offer higher performance in terms of power budget and accumulated bit rate compared to current PON solutions. The line rate in NG-PON2 (TWDM) per wavelength is 2.5 Gbit/s or 10 Gbit/s and up to 4...8 wavelengths can be stacked. Using state-of-the-art low-cost lasers and photodiodes, the required OLT-receiver sensitivity is too challenging to be achieved, because of the additional required wavelength selective filters and the higher line rates employed compared to the current deployed generation of PON. Optical amplifiers (OA) can be deployed at the OLT to solve this issue. Here, especially semiconductor optical amplifiers (SOA) offer high potential due to their large gain bandwidth and their capability to be integrated. Different budget classes require different OLT-Rx sensitivities.

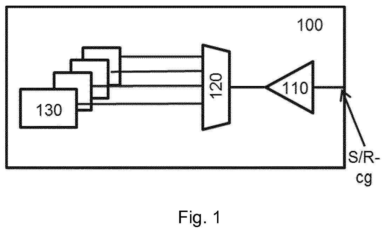

This OA can be either incorporated into the individual OLT's-receiver, i.e., a single OA is used per wavelength channel (as for example in XGS-PON, NG-PON2), or it can be incorporated into the active wavelength multiplexer (WM), as shown in Fig. 1, to handle several wavelength channels simultaneously (currently 4 or 8 wavelength channels are simultaneously present in the upstream path of NG-PON2 as per [1]). This way, the single OA is still part of the OLT's-receiver, but it is used jointly. It has been shown that existing OA can fulfil the linearity needs as shown in [2], in which a medium gain OA followed by a high sensitivity avalanched photodiode (APD)-transimpedance amplifier (TIA) or a high gain OA followed by a PIN photodiode - TIA is used.

However, while the use of an OA in front of the photodiode+TIA provides the required sensitivity for low input powers to the PON receiver, this necessary configuration is getting non-functional at high OLT-receiver input powers, i.e. the PON-receiver is not able to handle the entire required optical differential path loss of the optical distribution network in the PON. The reason is that a dedicated gain is required to achieve the requested sensitivity. At high OLT-receiver input powers, this required gain of the OA amplifies the signal to an optical power level that is unacceptably high for the photodiode+TIA to be received properly, i.e., it is above the overload threshold of the photoreceiver. This way, the requirement of a high dynamic power range at the photoreceiver cannot be achieved without other measures. The OA cannot be efficiently used to counteract this deficiency in TWDM-PON, because the receiver input power variations can occur across the different wavelength channels. In addition, such an approach is also limited in XGS-PON applications because of the change of the OA parameters (peak wavelength, wavelength range, wavelength dependent gain, etc...).

Thus, an objective of the invention is to solve the issue of the optical dynamic range of the photoreceiver for NG-PON2/XGS-PON applications to support the full range of possible deployment cases with a PON outside plant optical power dynamic in the range of 20 dB per wavelength channel.

### Summary of the Invention

The object of the invention is achieved by the method and means in the claims.

According to one aspect of the present invention, there is provided a method of handling signals in an Optical Line Terminal, OLT, in an optical network, the method comprising: a) receiving a first optical signal from at least one Optical Network Unit, ONU, b) splitting the first optical signal in power onto a first number of branches, obtaining a second optical signal on each of the branches, the first number being a natural number no less than 2; c) feeding the second optical signals on each of the branches respectively to a photoreceiver, obtaining an electrical signal on each of the branches; d) selecting one of the electrical signals for further processing, wherein, the selected electrical signal has the biggest electrical power among the electrical signals, the electrical power of which is below a tolerated electrical power of the photoreceiver.

In a preferred embodiment, the photoreceiver being implemented as: an Avalanche photodiode, APD, together with a trans-impedance amplifier TIA, or a PIN photodiode together with a TIA.

In a preferred embodiment, prior to step b), the method further comprises a step of: b1) amplifying the first optical signal.

In a preferred embodiment, prior to step b), the method further comprises a step of: b2) filtering the first optical signal to attenuate noise signal comprised in the first optical signal.

In a preferred embodiment, step d) is performed based on a comparison of a predetermined threshold and a parameter of the photoreceiver of at least one branch, the parameter representing an electrical power of the electrical signal on that branch.

In a preferred embodiment, the predetermined threshold is determined based on a tolerated optical power of the photoreceiver.

In a preferred embodiment, the parameter is photocurrent of the photoreceiver.

In a preferred embodiment, a power of the second optical signal on each of the branches is below a damage threshold of the respective photoreceiver.

According to another aspect of the present invention, there is provided a means of handling signals in an Optical Line Terminal, OLT, in an optical network, comprising: a power splitter configured to receive a first optical signal from at least one Optical Network Unit, ONU, and split the first optical signal in power onto a first number of branches, obtaining a second optical signal on each of the branches, the first number being a natural number no less than 2; a first number of photoreceivers, configured on each of the branches to convert the second optical signal on each of the branches respectively into an electrical signal;
an electrical switch, configured to select one of the electrical signals for further processing, wherein, the selected electrical signal has the biggest electrical power among the electrical signals, the electrical power of which is below a tolerated electrical power of the photoreceiver.

In a preferred embodiment, the photoreceivers are implemented as: an Avalanche photodiode, APD, together with a trans-impedance amplifier TIA, or a PIN photodiode together with a TIA.

In a preferred embodiment, the means further comprises: an optical amplifier, configured to amplify the first optical signal.

In a preferred embodiment, the means further comprises: a filter, configured to filter the first optical signal to attenuate noise signal comprised in the first optical signal.

In a preferred embodiment, the switch is configured to select one of the electrical signals based on a comparison of a predetermined threshold and a parameter of the photoreceiver of at least one branch, the parameter representing an electrical power of the electrical signal on that branch.

In a preferred embodiment, the predetermined threshold is determined based on a tolerated optical power of the photoreceiver.

In a preferred embodiment, a switching time of the electrical switch is in a range of 10-50 ns.

The solution in the present invention is technically relative simple and self-contained, because it need no processes over the PON or MAC to work.

Comparing to a solution where a variable optical attenuator is used in front of the photoreceiver, the present invention requires lower cost and lower risk, because there is no fast switching in the optical domain required. Comparing to another solution where power leveling is applied to all ONUs, the present invention is cheaper, because it is required only in the OLT and not in all ONUs of a PON.

### Brief description of the figures

The features and advantages of the invention will be more completely understood by appreciating the following detailed description of preferred embodiments with reference to the figures, wherein
Fig. 1 depicts a schematic block diagram of an OLT receiver according to the state of the art;
Fig. 2 depicts a schematic diagram of optical power levels and requirements on optical range of a photoreceiver in a TWDM-PON upstream network;
Fig. 3 depicts a schematic block diagram of a means 300 of handling signals in an OLT according to an embodiment of the present invention;
Fig. 4 depicts a schematic block diagram of a means 400 of handling signals in an OLT according to another embodiment of the present invention.

Wherein, same or similar reference numerals refer to same or similar parts or components.

### Detailed description

Exemplary embodiments of the present application are described herein in detail and shown by way of example in the drawings. It should be understood that, although specific exemplary embodiments are discussed herein there is no intent to limit the scope of the invention to such embodiments. To the contrary, it should be understood that the exemplary embodiments discussed herein are for illustrative purposes, and that modified and alternative embodiments may be implemented without departing from the scope of the invention as defined in the claims. Similarly, specific structural and functional details disclosed herein are merely representative for purposes of describing the exemplary embodiments. The invention described herein, however, may be embodied in many alternate forms and should not be construed as limited to only the embodiments set forth herein.

Fig.1 shows a schematic block diagram of an OLT receiver according to the state of the art.

The receiver 100 comprises an OA 110, a filter 120 to separate the upstream wavelength channels (carrying burst-mode signal with different power levels) and photo receiver APD+TIA 130 for each wavelength channels. The OLT-Rx sensitivity as well as the OLT-Rx overload power levels is defined at the S/R-cg point according to [1].

For example, in NG-PON2 a receiver optical power dynamic range per-wavelength channel and bit rate of 21dB (2.5Gbit/s) and 21.5dB (10Gbit/s) must be covered. In typical implementation scenarios, a single OLT-receiver (OA, filter, APD/TIA) has to handle various budget classes and 2.5Gbit/s and 10Gbit/s line rates from ONU's transmitter simultaneously. This way, a worst-case input power range of the OLT-receiver from -7dBm (OLT-Rx overload at N1 budget class and 10Gbit/s) to - 36.5dBm (OLT-Rx sensitivity at E2 budget class and 2.5Gbit/s) needs to be supported, i.e. an optical power dynamic range of 29.5dB. The OA can support this dynamic range independently if fiber-doped fiber amplifiers or semiconductor optical amplifiers are used. The OA can be designed for high linearity so that the signal input power dynamic at the OA (into the OLT-Rx) is preserved at the OA output. This way, the APD (or more general the photoreceiver) needs to cover also the full range of input power levels.

The APD-TIA which is located in the OLT-receiver has also to be operated in its linear operating region to allow for post-processing like electronic dispersion compensation (EDC). Therefore, the APD output voltage can be approximated to be limited at low input powers by the thermal noise contribution of the following main TIA - amplifier and at high input powers by the drive capability of the TIA output stage. For 10 Gbit/s a typical lower output voltage of 5mVpp and a typical high output voltage of 0.8Vpp are achievable. In an OLT-receiver that has to cope with bursty traffic in the US direction of the TWDM-PON the multiplication factor M of the APD is typically kept constant, and no regulation of M on a burst to burst base (ONU to ONU transmitter on-period) is considered. So, for this application the maximum dynamic range is approximately 20-22 dB, which is already less than the required dynamic range for a NG-PON2 receiver of approximately 30dB.

However, considering more details, it becomes obvious that the situation is even worse at the APD-TIA.

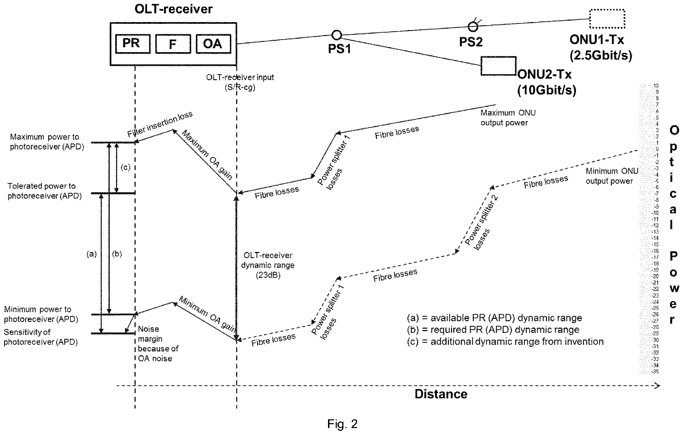

In Fig. 2, the typical optical power levels and optical dynamic ranges for an OLT-Rx comprising OA, filter and APD-TIA are estimated and discussed.

A typical stand-alone APD+TIA receiver offers a receiver sensitivity of -29dBm at a bit error ratio of 1 E-3 at 10Gbit/s with non-return-to-zero On-off keying (NRZ-OOK). Such an APD+TIA photoreceiver tolerates a power dynamic of 22dB (as discussed above) and, thus, offers an APD+TIA overload optical power level of -7dBm, see Fig. 2(a). Such receivers are used in today's networks at a rate of 2.5 Gbit/s offering the required dynamic range as well as the optimum operating point in terms of power levels. This situation changes in the case that an OA-based receiver must be used to enhance the sensitivity at the S/R-cg point. Here, the optical power level impinging on the APD+TIA increases in any input power situation at the S/R-cg point. Since the APD/TIA sensitivity and the APD/TIA overload power level is unchanged, the usable optical dynamic range of the photoreceiver is reduced.

Additionally, an OA adds noise to the signal so that an additional power margin at the APD+TIA input has to be taken into account. Our measurement and simulation results have shown that a 3-5dB margin is a good compromise to operate the receiver in an intermediate regime of limiting noise currents, which are the signal - amplified spontaneous noise beating induced by OA on one hand, the thermal noise and the excess noise from the photoreceiver (here: APD) on the other hand.
A quick calculation will show the possible maximum APD+TIA power levels in case an OA is used in the OLT-receiver:

The analysis is done for the budget class N1 of NG-PON2 [2], i.e., for an optical distribution network (PON outside plant) loss budget range of 14-29dB for a network in which simultaneously 2.5Gbit/s and 10Gbit/s ONUs are operated. The analysis is performed for the unlikely, but possible case according to the NG-PON2 standard, in which the ONUs are connected to different power splitter (PS) instances and that the power levels that enters the OLT-receiver are at the minimum and maximum so that the highest possible optical power dynamic that is required is obtained from the calculations. Fig. 2 shows the deployment abstraction of the PON. We consider two ONUs: the first one (ONU1) is transmitting a burst at 2.5 Gbit/s at a minimum optical output power level of 0 dBm [1]. The second ONU (ONU2) is transmitting a burst at 10 Gbit/s at a maximum optical output power level of +7dBm [1]. Both ONUs can be operated in the time multiplex or they might be operated simultaneously, but on different wavelength channels. The fiber losses and the losses of the splitter that might occur are shown in the figure (optical power levels versus distance). We assume that ONU1 is affect by the maximum losses of the N1 class, i.e. 29dB, and ONU2 is affected by the minimum losses of the N1 class, i.e. 14dB. This provides input power levels to the OLT receiver of -29dBm for ONU1 and -7dBm for ONU2. The dynamic is even more enhanced if the dispersion induced penalties are included for the far-off (weak power) ONU, i.e. a 1dB power penalty is taken into account according to [1]. Thus, the power level of ONU1 at the OLT-receiver input is -30dBm and the required OLT-receiver optical power dynamic range is 23dB in this case.

In the next step, the minimum SOA gain is calculated that is required to satisfy the sensitivity requirements of the OLT-receiver. In a second step, the maximum possible input power to the APD/TIA is calculated using the requirements of the optical distribution network of the TWDM-PON.

### 1. Calculate OA required gain:

Take an APD+TIA sensitivity of -29dBm at 10Gbit/s and a BER of 1 E-3 and add a 3dB noise margin (as explained above). This way at minimum -26dBm optical power has to be available in any case at the APD/TIA input. Looking at Fig. 2, it becomes obvious that there is an additional component, the optical filter, in front of the photoreceiver that has insertion loss. A typical wavelength separation filter (arrayed waveguide grating) for a 100 GHz grid might be assumed to have a 2dB insertion loss, i.e., the minimum required OA output power level is -24dBm.

The worst-case input power level into the OLT-Rx at the R/S-cg point at 2.5Gbit/s and N1 budget class is -30dBm. This way, a maximum OA gain of 6dB is needed. However, because of cost and manufacturing reasons, the OA has a polarization dependent gain (1dB), a wavelength dependent gain (1dB), a gain manufacturing tolerance across samples (1dB) and an aging tolerance (1dB). These effects have to be taken into account at the day-one of the deployment, i.e., the minimum gain of the OA has to be higher by about 4dB, i.e. a 10dB gain SOA has to be considered.

### 2. Maximum possible power to photoreceiver (APD/TIA):

The maximum possible input power into the OLT-Rx at the S/R-cg point can be - 7dBm at 10Gbit/s and N1 budget class. Take this overload power level and add 10dB OA gain, subtract 2dB filter insertion loss provides the maximum optical power level at the APD+TIA which is +1 dBm, see Fig. 2.

In summary, looking at Fig. 2, it becomes clear that the APD+TIA offers effectively a dynamic range of 22dB (a), whereas it needs to offer a dynamic range of 30dB (a + c) in the case where it is used in TWDM-PON (NG-PON2) environment and with an OA-based OLT-receiver. The photoreceiver can offer the range of power levels up to the maximum power level specified in (a). The additional required dynamic range is provided using our invention, i.e. (c), providing an additional dynamic range of 8-10dB.

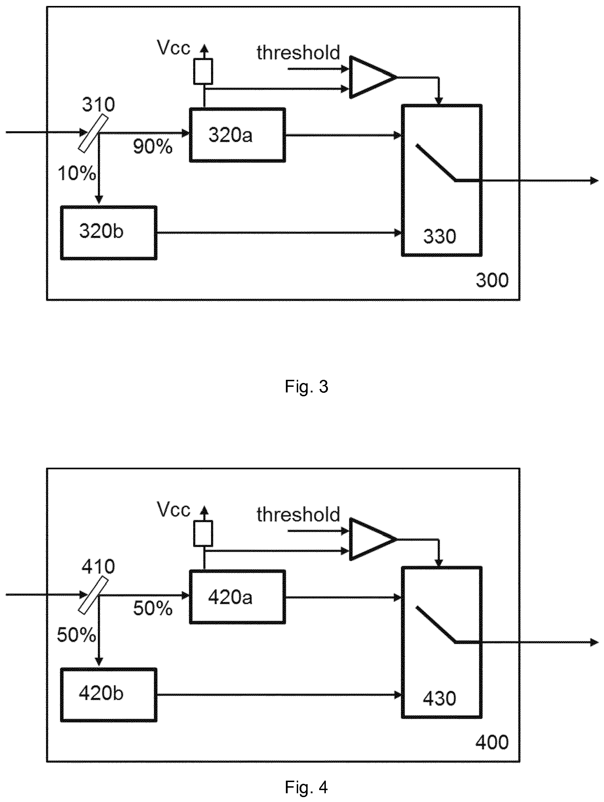

Fig. 3 shows a schematic block diagram of a means 300 of handling signals in an OLT receiver according to an embodiment of the present invention.

The means 300 comprises a power splitter 310 configured to receive a first optical signal from at least one ONU, and split the first optical signal in power onto two branches, obtaining a second optical signal on each of the branches. In another embodiment, the power splitter 310 may split the first optical signal in power onto more than two branches.

Specifically, the first optical signal may be received from a power splitter or multiplexer, combining optical signals from a plurality of ONUs. The first optical signal may advantageously be amplified and/or filtered before arriving at the power splitter 310. The means 300 may further comprise an optical amplifier (not shown) configured to amplify the first optical signal and/or a filter (not shown) configured to filter the first optical signal to attenuate noise signal comprised in the first optical signal. Advantageously, a filter transfer function is chosen, so that the useful data signal is not or only minimal attenuated, whereas the noise is highly attenuated.

The means 300 comprises on each of the branches a photoreceiver 320a and 320b. The second optical signals on each of the branches are respectively fed to the photoreceivers. The photoreceivers 320a and 320b are configured to convert the second optical signal on each of the branches respectively into an electrical signal. The photoreceivers may be implemented as: APD-TIA or PIN TIA. In the embodiment shown in Fig. 3, the photoreceivers 320a and 320b are implemented with photodiodes having same multiplication gain. For example, in Fig. 3, they may be both implemented as APD-TIA. In another embodiment, the photoreceivers 320a and 320b may be both implemented as PIN-TIA with a multiplication gain of zero.

In the embodiment shown in Fig. 3 , the first optical signal is spitted unequally in power onto the first number of branches. For example, 90% of the optical power of the first optical signal is distributed onto the first photo receiver 320a, and 10% of the optical power of the first optical signal is distributed onto the second photo receiver 320b. In another embodiment, the optical power of the first optical signal may be distributed according to another percentage. However a power of the second optical signal on each of the branches shall be kept below a damage threshold of the respective photoreceiver, which is about +5dBm in the embodiment using APD/TIA as photoreceiver.

Unequally distribution of the optical power onto different photoreceivers makes it possible that the optical power on one branch is beyond the tolerated optical power of the photoreceiver, but still below the damage threshold of the photoreceiver, namely within the range marked as (c) in Fig. 2, while on the other branch, the optical power is still below the tolerated optical power of the photoreceiver.

Since the optical power is proportional to the electrical photo-current and thus to the square of the electrical power, and the electrical photo-current is easy to determine, in the following, electrical photo-current and electrical power may be used to represent the optical power of the photoreceiver.

The means 300 further comprises an electrical switch 330. It is configured to select one of the electrical signals for further processing. Wherein, the selected electrical signal has the biggest electrical power among the electrical signals, the electrical power of which is below the tolerated electrical power of the photoreceiver. The switching time of the electrical switch 330 is in a range of 10-50 ns.

Specifically, the switch 330 is controlled by a comparison result, comparing a predetermined threshold and photocurrent of the photoreceiver. The predetermined threshold is determined based on a tolerated optical power of the photoreceiver. An analog monitor circuit is used to monitor the photocurrent of the photoreceiver 320a.

In the following, the operation of the switch 330 will be explained with respect to the embodiment mentioned above, with 90% of the optical power of the first optical signal being distributed onto the first photo receiver 320a, and 10% of the optical power of the first optical signal being distributed onto the second photo receiver 320b.
If the photocurrent of the photoreceiver 320a is above the predetermined threshold, it means the optical power on this branch is beyond the tolerated optical power of the photoreceiver. Distortion may be introduced if further processing is carried out based on the electrical signal generated by the photoreceiver 320a. Therefore, the switch 330 will switch to the other branch, selecting the electrical signal generated by the photoreceiver 320b. Thereby, distortion can be avoided.

If the photocurrent of the photoreceiver 320a is below the predetermined threshold, it means the optical power on both branches is within the tolerated optical power of the photoreceiver. Distortion may not be introduced if further processing is carried out based on the electrical signal generated by any of the photoreceiver 320a and 320b. In that case, the switch 330 will switch to select the electrical signal generated by the photoreceiver 320a, since its power is bigger than that of the photoreceiver 320b. Thereby better sensitivity can be provided.

In another embodiment, instead of photocurrent of the photoreceiver, other parameter representing the electrical power of the electrical signal may be used in the comparison. In that case, the predetermined threshold also needs to be adapted according to the parameter used in the comparison. For example, a fast BM-read the signal strength indicator (RSSI) being present at the OLT-receiver could be used with a sampling point close to the beginning of the preamble of the burst to determine the receiver signal amplitude and therefore be the base for the decision for one of the two receiver-branches. Another option is to use a possibly already existing monitoring tap to determine the power level of the input burst for the decision process.

After the electrical signal is selected, further processing may be carried out based on the selected electrical signal. Further processing comprises main amplifying and clock data recovery.

According to the present invention, the effective optical power dynamic range of the OLT receiver is increased.

Fig. 4 shows a schematic block diagram of a means 400 of handling signals in an OLT receiver according to another embodiment of the present invention.

The components that are similar to those described with respect to Fig. 3 will not be elaborated here.

The power splitter 410 is configured to split the first optical signal equally in power onto the two branches.

In the embodiment shown in Fig. 4, the photoreceivers 420a and 420b are implemented with photodiodes with different multiplication gain. Therefore, even if the power of the first optical signal is equally distributed onto the photoreceivers 420a and 420b, the electrical power on different branches is different from each other.

For example, the photoreceiver 420a is implemented as APD-TIA, and the photoreceiver 420a is implemented as PIN-TIA. Since the multiplication gain of the APD-TIA is higher, when optical signals with same power are received by the photoreceiver APD-TIA 420a and photoreceiver PIN-TIA 420b, the electrical signal generated by the photoreceiver APD-TIA 420a has higher electrical power.

With such configuration, it is possible that the electrical power on the photoreceiver 420a is beyond the tolerated electrical power of the photoreceiver APD-TIA 420a, but still below the damage threshold of the photoreceiver APD-TIA 420a, while on the other photoreceiver PIN-TIA 420b, the optical power is still below the tolerated optical power of the photoreceiver PIN-TIA 420b, since the PIN-TIA offers larger overload power levels.

The switch 430 is configured to select one of the electrical signals for further processing. Similar as it is described with respect to Fig.3, the selected electrical signal has the biggest electrical power among the electrical signals, the electrical power of which is below the tolerated electrical power of the photoreceiver.

In the embodiment shown in Fig. 4, when the electrical power of both photoreceiver 420a and 420b are respectively below their tolerated electrical power, the electrical signal from the photoreceiver APD-TIA 420a shall be selected since it is providing higher power. If the electrical power of the photoreceiver 420a is above its tolerated electrical power, the electrical signal from the photoreceiver PIN-TIA 420b shall be selected to avoid distortion.

Specifically, the switch 430 may be implemented similarly as switch 330 described with respect to Fig 3.

In another embodiment with more than 2 branches, the embodiment described with respect to Fig. 3 and Fig. 4 may be combined together. For example, in an embodiment with three branches, photoreceivers on the first and second branches are implemented as APD-TIA, while the photo receiver on the third branch is implemented as PIN-TIA. The power of the first optical distributed on the three branches as 80% on the first branch, 15% on the second branch, and 5% on the third branch.

### List of cited references:

[1] "40-gigabit-capable passive optical networks (NG-PON2): Physical media dependent (PMD) layer specification," ITU-T G.989.2.
[2] R. Bonk et al., "Beneficial OLT transmitter and receiver concepts for NG-PON2 using semiconductor optical amplifiers," Journal of Optical Communications and Networking 7 (3), A467-A473.

## Claims

1. A method of handling signals in an Optical Line Terminal, OLT, in an optical network,
the method comprising:
a) receiving a first optical signal from at least one Optical Network Unit, ONU,
b) splitting the first optical signal in power onto a first number of branches, obtaining a second optical signal on each of the branches, the first number being a natural number no less than 2;
c) feeding the second optical signals on each of the branches respectively to a photoreceiver, obtaining an electrical signal on each of the branches;
d) selecting one of the electrical signals for further processing, wherein, the selected electrical signal has the biggest electrical power among the electrical signals, the electrical power of which is below a tolerated electrical power of the photoreceiver.

2. A method according to claim 1, the photoreceiver being implemented as:
- an Avalanche photodiode, APD, together with a trans-impedance amplifier TIA,
or
- a PIN photodiode together with a TIA.

3. A method according to claim 1, prior to step b), further comprising a step of:
b1) amplifying the first optical signal.

4. A method according to claim 1, prior to step b), further comprising a step of:
b2) filtering the first optical signal to attenuate noise signal comprised in the first optical signal.

5. A method according to claim 1, wherein, step d) is performed based on a comparison of a predetermined threshold and a parameter of the photoreceiver of at least one branch, the parameter representing an electrical power of the electrical signal on that branch.

6. A method according to claim 5, wherein, the predetermined threshold is determined based on a tolerated optical power of the photoreceiver.

7. A method according to claim 5, wherein, the parameter is photocurrent of the photoreceiver.

8. A method according to claim 1, wherein, a power of the second optical signal on each of the branches is below a damage threshold of the respective photoreceiver.

9. A means of handling signals in an Optical Line Terminal, OLT, in an optical network, comprising:
a power splitter (310) configured to receive a first optical signal from at least one Optical Network Unit, ONU, and split the first optical signal in power onto a first number of branches, obtaining a second optical signal on each of the branches, the first number being a natural number no less than 2;
a first number of photoreceivers (320a, 320b), configured on each of the branches to convert the second optical signal on each of the branches respectively into an electrical signal;
an electrical switch (330), configured to select one of the electrical signals for further processing, wherein, the selected electrical signal has the biggest electrical power among the electrical signals, the electrical power of which is below a tolerated electrical power of the photoreceiver.

10. A means according to claim 9, wherein, the photoreceivers are implemented as:
- an Avalanche photodiode, APD, together with a trans-impedance amplifier TIA,
or
- a PIN photodiode together with a TIA.

11. A means according to claim 9, further comprising:
an optical amplifier, configured to amplify the first optical signal.

12. A means according to claim 9, further comprising:
a filter, configured to filter the first optical signal to attenuate noise signal comprised in the first optical signal.

13. A means according to claim 9, wherein, the switch (330) is configured to select one of the electrical signals based on a comparison of a predetermined threshold and a parameter of the photoreceiver of at least one branch, the parameter representing an electrical power of the electrical signal on that branch.

14. A means according to claim 13, wherein, the predetermined threshold is determined based on a tolerated optical power of the photoreceiver.

15. A means according to claim 9, wherein, a switching time of the electrical switch is in a range of 10-50 ns.
